Europäisches Patentamt

**European Patent Office**

**Office européen des brevets**

(19)

(11) Veröffentlichungsnummer: **0 018 655**
**A2**

(12) # EUROPÄISCHE PATENTANMELDUNG

(21) Anmeldenummer: **80102404.3**

(22) Anmeldetag: **02.05.80**

(51) Int. Cl.³: **A 01 K 63/06**
**H 05 B 3/30**

(30) Priorität: **05.05.79 DE 2918176**

(43) Veröffentlichungstag der Anmeldung:
**12.11.80 Patentblatt 80/23**

(84) Benannte Vertragsstaaten:
**AT BE CH FR GB IT LI NL SE**

(71) Anmelder: **SP Jürgen Schwarzer GmbH & Co KG**
**Steeler Strasse 477a**
**D-4300 Essen 14(DE)**

(72) Erfinder: **Seidensticker, Hans-Jürgen**
**Iländerweg 7**
**D-4300 Essen 16(DE)**

(72) Erfinder: **Lüttringhaus, Heinz**
**Freiherr-vom-Stein-Strasse 153**
**D-4300 Essen 16(DE)**

(72) Erfinder: **Schwarzer, Jürgen**
**Springloh 17a**
**D-4300 Essen 15(DE)**

(74) Vertreter: **Spalthoff, Adolf, Dipl.-Ing.**
**Pelmanstrasse 31 P.O. Box 34 02 20**
**D-4300 Essen 1(DE)**

(54) **Flächenheizelement.**

(57) Die Erfindung betrifft ein Flächenheizelement, welches einen oder mehrere Heizleiter aufweist, der bzw. die zwischen einer oberen und unteren Abdeckung angeordnet ist bzw. sind, und mit elektrischen Anschlußelementen in Verbindung steht bzw. stehen. Aufgabe der Erfindung ist es ein Flächenheizelement, insbesondere zum Beheizen eines Aquariums, zu schaffen, welches in einfacher Weise ausgebildet und zu handhaben ist sowie eine baukastenmäßige Zusammenstellung einzelner Flächenheizelemente ermöglicht. Erfindungsgemäß wird dies dadurch erreicht, daß im Anschlußbereich (22) des Flächenheizelementes (10) ein die elektrischen Anschlußelemente enthaltendes Gehäuse (1) angebracht ist, welches an seiner einen Seite mit Kontaktstiften (2) und an seiner gegenüberliegenden Seite mit diesen angepaßten Kontakthülsen (3) ausgerüstet ist. In die eine Seite des Gehäuses (1) ist unter Fortfall der Kontaktstifte (2) ein elektronischer thermostatischer Regler als Einschubeinheit über innenliegende Kontaktstifte (15) eingesetzt, der an eine Spannungsquelle anschließbar ist. Die Einschubeinheit mit dem Regler besitzt einen zusätzlichen Anschluß für eine Fotodiode oder einen Fotowiderstand.

EP 0 018 655 A2

./...

Fig.6

Fig.2

Dipl.-Ing. A. Spalthoff, Patentanwalt, 43 Essen

- / -

"Flächenheizelement"

Die Erfindung betrifft ein Flächenheizelement, welches einen oder mehrere Heizleiter aufweist, der bzw. die zwischen einer oberen und unteren Abdeckung angeordnet ist bzw. sind und mit elektrischen Anschlußelementen in Verbindung steht bzw. stehen.

Derartige Flächenheizelemente sind an sich bekannt und finden für Zwecke der Wand- oder Fußbodenheizung Verwendung.

Durch die DE-OS 26 29 577 ist es bekannt, Aquarien mittels Flächenheizelementen zu beheizen. Zu diesem Zweck ist das Aquarium auf ein der Form des Aquariums angepaßtes Flächenheizelement aufgesetzt, welches an einer Seite einen das Aquarium überragenden Ansatz aufweist, in den ein elektrisches Anschlußkabel hineingeführt ist, das mit einem in übliche Steckdosen passenden Stecker versehen ist. Diese bekannte Anordnung hat den wesentlichen Nachteil, daß für jede Aquariengröße ein Flächenheizelement angefertigt werden muß, da das Aquarium vollflächig aufstehen muß, anderenfalls die Gefahr eines Bruches des Beckens besteht. Weiterhin erfordert diese Ausgestaltung einen vergleichsweise großen Aufwand für die Lagerhaltung.

Von diesem Stand der Technik ausgehend liegt der Erfindung die

Aufgabe zugrunde, ein Flächenheizelement, insbesondere zum Beheizen eines Aquariums, zu schaffen, welches in einfacher Weise ausgebildet und zu handhaben ist sowie eine baukastenmäßige Zusammenstellung einzelner Flächenheizelemente ermöglicht.

Gemäß der Erfindung wird dies dadurch erreicht, daß an einem Rand des Flächenheizelementes ein die elektrischen Anschlußelemente enthaltendes Gehäuse angebracht ist, welches an seiner einen Seite mit Kontaktstiften und an seiner anderen, gegenüberliegenden Seite mit diesen angepaßten Kontakthülsen ausgerüstet ist. Durch diese Ausgestaltung wird erreicht, daß eine Vielzahl derartiger Flächenheizelemente zusammengeschaltet werden kann, wozu es lediglich des Einsteckens der Kontaktstifte eines Gehäuses eines Flächenheizelementes in die Kontakthülsen des Gehäuses des benachbarten Flächenheizelementes bedarf. Auf diese Weise ist somit eine Anpassung an verschiedene Abmessungen der zu beheizenden Gegenstände, z.B. Aquarien, ohne weiteres möglich, wobei es lediglich eines Grundbauteils bedarf.

Vorteilhaft ist in die eine Seite des Gehäuses unter Fortfall der Kontaktstifte ein elektronischer thermostatischer Regler als Einschubeinheit eingesetzt, der an eine Spannungsquelle anschließbar ist. Für mehrere hintereinandergeschaltete Flächenheizelemente ist lediglich von der Spannungsquelle her gesehen

Dipl.-Ing. A. Spalthoff, Patentanwalt, 43 Essen

- 3 -

in dem Gehäuse des ersten Flächenheizelementes ein Regler
vorhanden, welcher die Heizleistung der nachgeschalteten
Flächenheizelemente mit reguliert, und zwar in der Weise,
daß sämtliche Heizleiter mit voller Leistung betrieben werden und nach Erreichen einer bestimmten, über den Regler eingestellten Temperatur abgeschaltet und nach Absinken der
Temperatur um einen gewissen Differenzbereich wieder eingeschaltet werden.

Das Gehäuse des Flächenheizleiters ist mit einer Kontrollampe versehen, so daß auch bei mehreren hintereinandergeschalteten Flächenheizelementen sofort feststellbar ist, ob diese
sich in Betrieb befinden, oder aber ob eine Störung vorliegt.

Vorteilhaft besitzt die Einschubeinheit mit dem Regler einen
zusätzlichen Anschluß für eine Fotodiode oder einen Fotowiderstand, welche über eine Lichtquelle den Regler steuern, beispielsweise zur Einstellung einer Nachtabsenkung. Über den Anschluß ist es möglich, die Steuerung von einer entfernt liegenden Lichtquelle vorzunehmen.

Gemäß einem weiteren Vorschlage der Erfindung weist die Einschubeinheit mit dem Regler einen Anschluß für einen
Temperaturfühler auf, der dem zu beheizenden Gegenstand
zugeordnet ist, beispielsweise in Anwendung bei einem Aquarium,
in dessen Wasser gehängt wird. Der Temperaturfühler kann mit einer

- 4 -

Kontrollampe versehen sein, so daß beispielsweise ein vieradriges Anschlußkabel benötigt wird, oder aber auch getrennt
angeordnet sein, wobei dann für den Temperaturfühler sowie
die Kontrollampe jeweils eine zweiadrige Anschlußleitung
erforderlich ist.

Die Oberseite des Gehäuses verläuft zu seiner einen  Seite hin
abgeschrägt, so daß etwa auftropfendes Wasser zwangsläufig
abgeführt wird. Mindestens an einem Rand ist an der Unterseite
des Gehäuses eine Tropfkante vorhanden, die der gezielten Wasserableitung dient.

Nach einem weiteren Vorschlage der Erfindung ist an einer Seite
des Gehäuses im Bereich seines unteren Teils ein vorragender
leistenförmiger Ansatz angebracht, welcher der Festlegung dient,
und zwar wird der zu beheizende Gegenstand, beispielsweise ein
Aquarium, auf diesen leistenförmigen Ansatz aufgesetzt, so daß
sich dieser fest auf seine Unterlage aufpreßt  und damit das
Flächenheizelement sowohl als auch sein die Anschlußelemente
enthaltendes Gehäuse festgelegt sind.

An einem Rand an der Unterseite des Gehäuses ist eine Platte
od.dgl. schwenkbar angeordnet, beispielsweise bei einstückiger
Ausbildung über eine Schwachstelle im Material in diesem Bereich,
welche in ihren Abmessungen dem Boden des Gehäuses entspricht.
Zwischen der Platte od.dgl. und dem Boden des Gehäuses ist der
dem elektrischen Anschluß dienende Rand des Flächenheizelementes

Dipl.-Ing. A. Spalthoff, Patentanwalt, 43 Essen

- 5 -

unter Herstellung einer leitenden Verbindung zwischen Heizleitern und elektrischen Anschlußelementen des Gehäuses befestigt. Zu diesem Zweck erfolgt zunächst die Kontaktierung,
worauf durch Umschwenken der Platte od.dgl. die Befestigung
vorgenommen wird. Diese kann beispielsweise durch Verschraubung,
Rastung, Klebung od.dgl. erfolgen. Vorteilhaft finden
als Rastglieder vorragende Zapfen und diesen zugeordnete Ausnehmungen od.dgl. Verwendung, welche ringförmige, einander
zugeordnete Wulste bzw. Einbuchtungen besitzen, die in der
Raststellung ineinandergreifen und eine vergleichsweise hohe
Dichtwirkung ergeben, so daß das Gehäuse spritzwassergeschützt
ist.

Das Heizelement weist vorteilhaft zwei mit Abstand zueiander
angeordnete Heizleiter auf. Diese sind an ihren oberen und unteren Enden an flächige Leiter angeschlossen. Der eine Leiter
ist von einem Rand des Flächenheizelementes in dessen Anschlußbereich zum anderen gegenüberliegenden Rand durchlaufend angeordnet, während der andere Leiter von dem einen Rand des Flächenheizelementes in dessen Anschlußbereich entlang seiner Randbereiche zu dem anderen, gegenüberliegenden Rand im Anschlußbereich
des Flächenheizelementes geführt ist. Auf diese Weise wird erreicht, daß die Heizleiter jeweils an ihren oberen Enden an die
eine Phase und mit ihren unteren Enden an die andere Phase des
Netzes angeschlossen sind. Vorteilhaft ist zwischen den Heizleitern ein weiterer Leiter vorgesehen, der sich vom Anschlußbereich des Flächenheizelementes bis zu dem anderen entlang der Ränder des Flächenheizelementes geführten Leiter erstreckt.
Dieser dient dem Anschluß des elektronischen Reglers.

Gemäß einem weiteren Vorschlag der Erfindung ist die Unterseite der unteren Abdeckung mit Aluminium od.dgl. beschichtet,
so daß sich eine Abstrahlung nach oben ergibt, was zu einer
zusätzlichen Erwärmung führt.

Die obere Abdeckung des Flächenheizelementes kann gemäß einem
weiteren Merkmal der Erfindung die Unterseite des zu beheizenden Gegenstandes bilden. So ist es möglich, auf die den Boden
eines Aquariums bildende Glasplatte die Heizleiter aufzubringen,
beispielsweise durch Kleben, Bedrucken usw. Im Rahmen der Erfindung ist es auch möglich, diese in gleicher Weise auf die untere
Abdeckung aufzubringen. Im erwähnten Ausführungsbeispiel kann
es vorteilhaft sein, als untere Abdeckung eine Platte od.dgl.
in Form einer Scheibe zu verwenden, oder aber auch eine Folie
vorzusehen.

Das erfindungsgemäße Flächenheizelement eignet sich besonders,
ggf. zu mehreren aneinandergereiht, zur Beheizung eines Aquariums,
welches auf dieses bzw. diese aufgesetzt ist. Die Heizleistung
eines Flächenheizelementes ist für die Größe eines diesem in
seiner Aufstandsfläche angepaßten Aquariums ausgelegt, so daß
für die nächstgrößere Type eines Aquariums zwei Flächenheizelemente zusammengeschaltet werden usw.

0018655

- 7 -

Ein Ausführungsbeispiel der Erfindung ist an Hand der Zeichnung näher erläutert, und zwar zeigt:


Fig.  1   eine Unteransicht des Gehäuses mit angeformter Platte,

Fig.  2   eine geschnittene Seitenansicht gemäß der
          Linie II - II der Fig. 1,

Fig.  3   eine Seitenansicht der Fig. 1 gemäß dem
          Pfeil III,

Fig.  4   eine Unteransicht einer Variante des Gehäuses mit angeformter Platte,

Fig.  5   eine geschnittene Ansicht gemäß der Linie
          V - V der Fig. 4 und

Fig.  6   eine Draufsicht des Flächenheizelementes ohne
          Gehäuse.


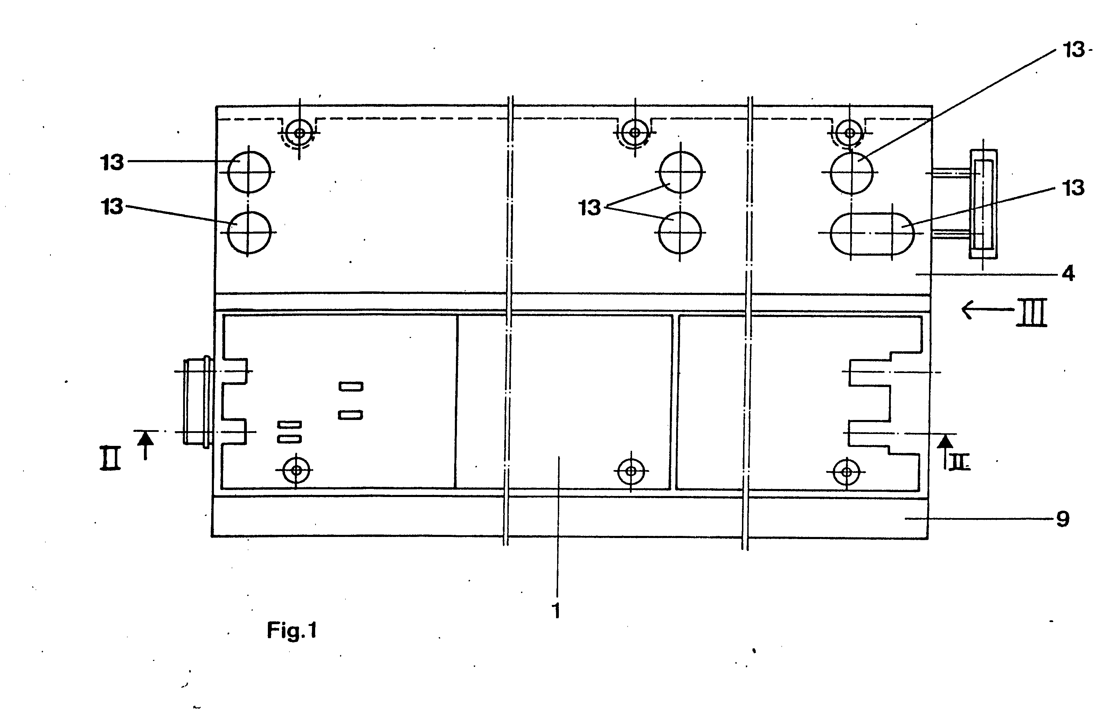

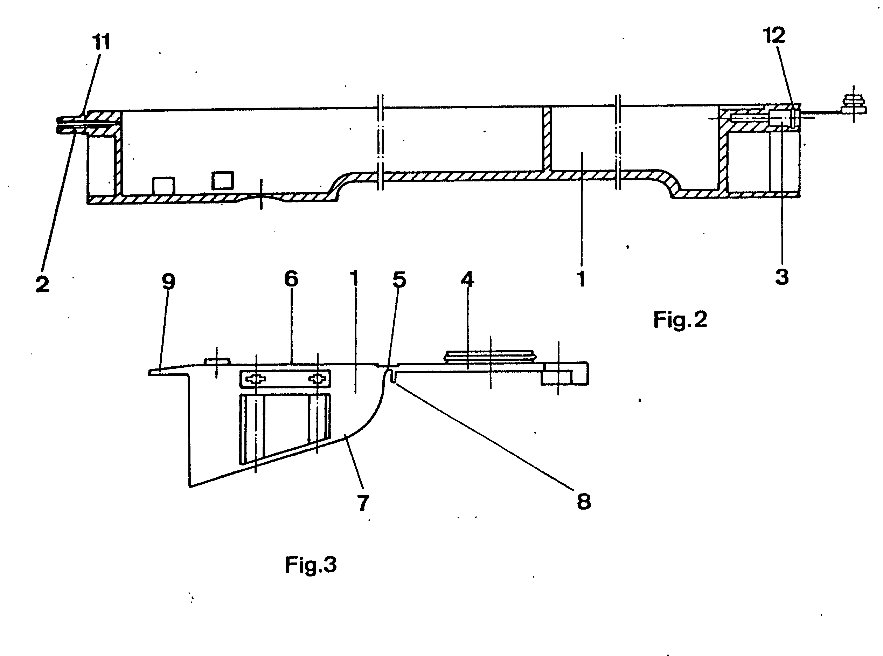

Wie aus Fig. 1 - 3 hervorgeht, ist mit 1 das die elektrischen
Anschlußelemente aufnehmende Gehäuse bezeichnet, welches an
seiner einen Seite mit Kontaktstiften 2 und an seiner anderen
gegenüberliegenden Seite mit Kontakthülsen 3 ausgerüstet ist,
die den Kontaktstiften angepaßt ist, so daß diese zur Herstellung von Steckverbindungen ineinanderfügbar sind. Am Gehäuse 1 angeformt ist die Platte 4, und zwar unter Bildung
einer Schwachstelle 5 im Material, so daß diese um 180° gegen
den Boden 6 des Gehäuses 1 schwenkbar ist. Die Oberseite 7 des
Gehäuses verläuft zu einer Seite hin abgeschrägt, so daß etwa

- 8 -

auftropfendes Wasser zwangsläufig abgeleitet wird. Zu diesem Zweck ist an einem Rand der mit dem Gehäuse 1 verbundenen Platte 4 eine Tropfkante 8 vorhanden. An einer Seite des Gehäuses 1 ist im Bereich seines unteren Teils ein vorragender leistenförmiger Ansatz 9 angebracht, welcher dem Aufstellen des zu beheizenden Gegenstandes, beispielsweise eines Aquariums, dient. Durch das Eigengewicht des zu beheizenden Gegenstands wird der vorragende Ansatz 9 gegen seine Auflage gepreßt, so daß eine sichere Festlegung erreicht ist. Die Platte 4 entspricht in ihren Abmessungen etwa der Größe des Bodens 6 des Gehäuses 1, so daß dieser nach Verschwenken der Platte 4 um 180° von dieser vollständig abgedeckt ist.

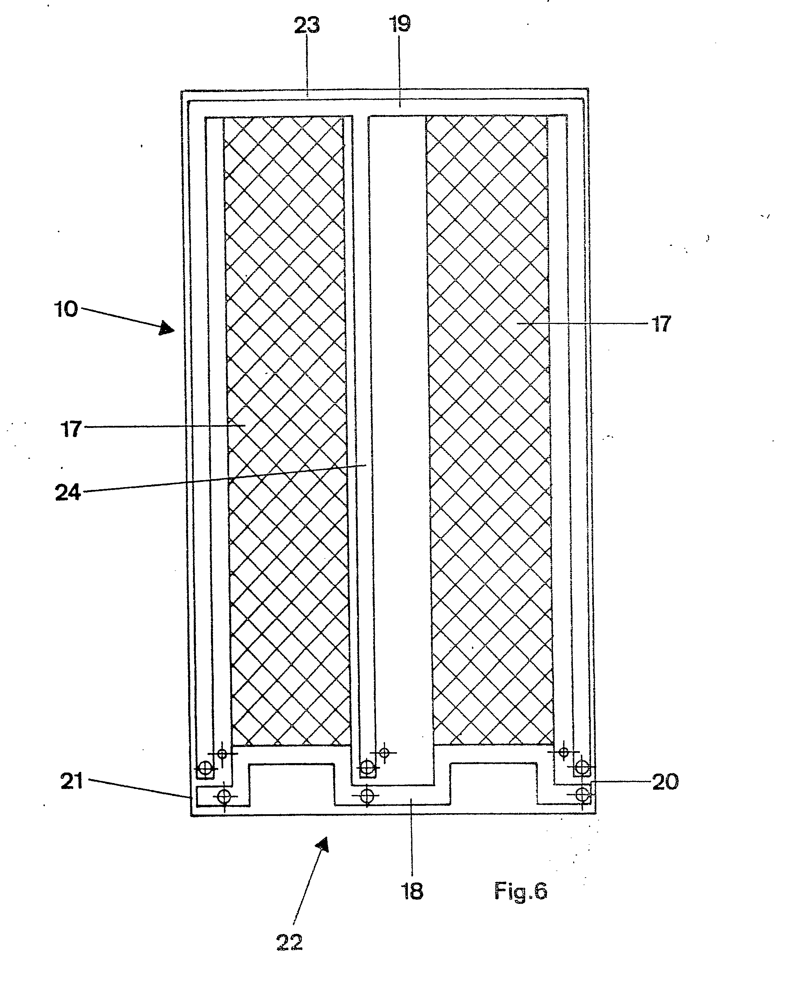

Zwischen der Platte 4 und dem Boden 6 des Gehäuses 1 wird der dem Anschluß dienende Rand des eigentlichen Flächenheizelementes 10 (Fig. 6) befestigt, und zwar nach Herstellen der elektrisch leitenden Verbindungen zwischen diesem und den Kontaktstiften und -hülsen 3 des Gehäuses 1. Die Platte 4 und der Boden 6 des Gehäuses 1 können durch Rastung oder Klebung miteinander verbunden sein.

Die Kontaktstifte 2 sind mit ringförmigen Wulsten 11 und die Kontakthülsen 3 mit entsprechend gestalteten Einbuchtungen 12 ausgeführt, so daß beim Ineinanderstecken der Kontaktstifte 2 und Kontakthülsen 3 eine rastende und außerdem spritzwasserdichte Verbindung geschaffen ist.

Dipl.-Ing. A. Spalthoff, Patentanwalt, 43 Essen

- 9 -

Für die Herstellung der elektrisch leitenden Verbindungen
mit den Kontaktstiften 2 einerseits und den Kontakthülsen
3 andererseits dienen die in der Platte 4 vorgesehenen Ausnehmungen 13.

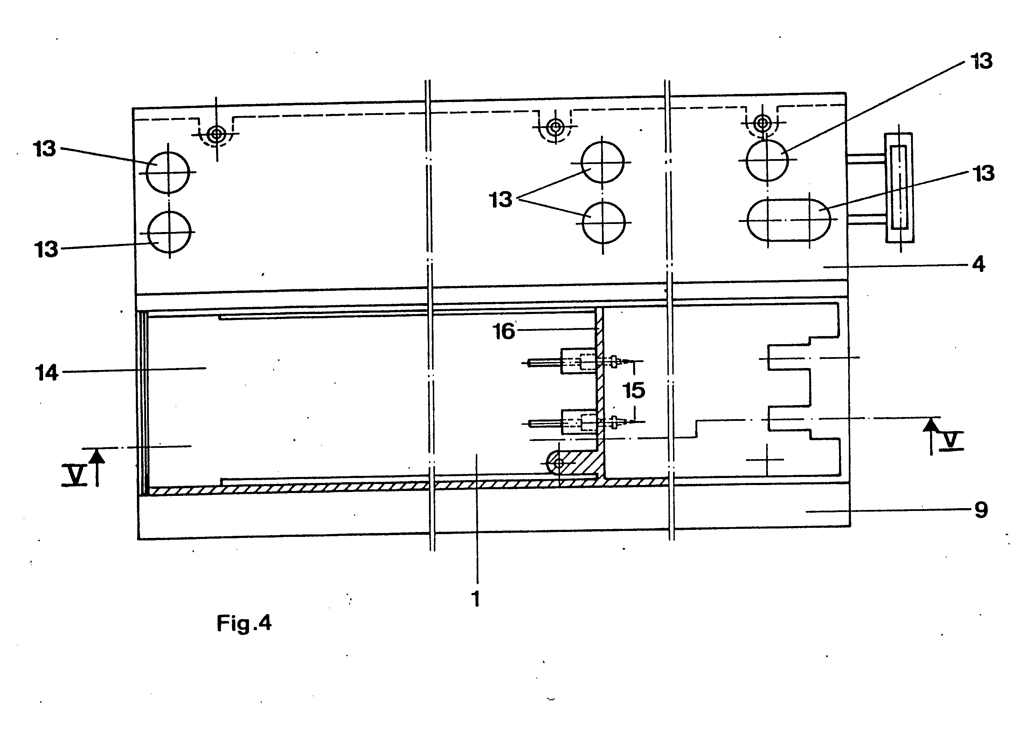

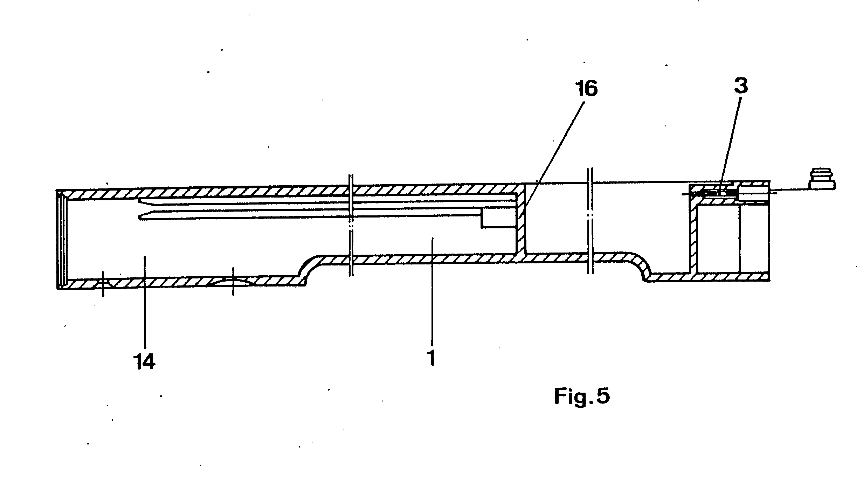

Bei der Ausführungsform des Gehäuses nach Fig. 4 und 5 sind
die Kontaktstifte 2 in Fortfall gekommen, wobei der so freigewordene Bereich 14 zur Aufnahme eines nicht weiter dargestellten elektronischen thermostatischen Reglers dient, welche als
Einschubeinheit ausgebildet und von der Seite her in die Kammer
14 des Gehäuses einschiebbar ist. Der Regler ist auf der einen
Seite mit einem Netzanschluß versehen und auf seiner anderen
Seite an die Kontaktstifte 15 angeschlossen, die sich in einer
Zwischenwand 16 des Gehäuses 1 befinden.

Der Aufbau des eigentlichen Flächenheizelementes 10 ist aus
Fig. 6 ersichtlich.

Dieses besitzt eine obere und untere Abdeckung, beispielsweise
in Form einer Folie, die der Einfachheit halber nicht dargestellt sind. Zwischen der oberen und unteren Abdeckung befinden sich zwei mit Abstand zueinander angeordnete Heizleiter
17, welche an ihren oberen und unteren Enden an flächige Leiter 18, 19 angeschlossen sind. Der Leiter 18 ist von dem Rand
20 des Flächenheizelementes 10 durchlaufend zum gegenüberliegenden Rand 21 angeordnet, wobei dieser etwa mäanderförmig ausgeführt ist. Der andere Leiter 19 verläuft vom Anschlußbereich 22 des Flächenheizelementes 10 entlang der Ränder 20,21 sowie 23, wobei der Anfang und das Ende dieses Leiters 19 denen des Leiters 18 benachbart sind. Zwischen den Heizleitern 17 ist ein weiterer Leiter 24 vorgesehen, der im unteren Bereich des Flächenheizelementes 10 mit dem Leiter 19 verbunden ist und sich bis in den Anschlußbereich 22 des Flächenheizelementes 10 erstreckt. Dieser Leiter 24 dient dem Anschluß eines Reglers.

Durch die Beabstandung der beiden Heizleiter 17 ergeben sich Kalt- und Warmzonen, die bei Beheizung eines mit Wasser gefüllten Behälters, z.B. eines Aquariums, zu einer umlaufenden Strömung in der Flüssigkeit führen.

Die Zusammenfügung von Gehäuse 1 mit Platte 4 einerseits und dem Anschlußbereich 22 des Flächenheizelementes 10 geschieht in der Weise, daß zunächst der Anschlußbereich 22 mit den Abschlußenden der Leiter 18,19,24 auf den Boden 6 des Gehäuses 1 aufgebracht und nach Kontaktierung mit den in diesem befindlichen Kontaktstiften 2 und -hülsen 3 die Klappe 4 um 180° umgeschwenkt wird und diese am Gehäuse 1 durch Verschraubung und Rastung od.dgl. befestigt ist, so daß das Flächenheizelement 10 und das Gehäuse 1 sicher miteinander verbunden sind. Durch einen auf den vorragenden Ansatz 9 aufgestellten Gegenstand wird dieser Ansatz unter dem Gewicht des Gegenstandes auf seine Auflage gepreßt und damit gleichzeitig auch das eigentliche Flächenheizelement 10 gehalten.

Dipl.-Ing. A. Spalthoff, Patentanwalt, 43 Essen

*- 11 -*

Das Flächenheizelement 10 kann als obere und untere Abdeckung eine dünne Folie besitzen, so daß ein zu beheizender Gegenstand ohne umlaufenden Höhenausgleich aufgesetzt
werden kann. Es ist jedoch auch möglich, die Heizleiter 17
und Leiter 18,19,24 auf die Unterseite eines zu beheizenden Gegenstandes unmittelbar aufzubringen, sei es durch
Kleben, Bedrucken usw., und als untere Abdeckung eine Platte, Folie od.dgl. zu verwenden.

**Dipl.-Ing. A. Spalthoff**

Patentanwalt

D-43 Essen 1, den  2. 5. 1980

Pelmanstraße 31

Postschließfach 34 02 20

Telefon (0201) 77 2008

0018655

Akten-Nr. 23 228 S/F.
in der Antwort bitte angeben

SP Jürgen Schwarzer
GmbH & Co KG

Steeler Straße 477a

4300 Essen 14

P A T E N T A N S P R Ü C H E :

1. Flächenheizelement, welches einen oder mehrere Heizleiter aufweist, der bzw. die zwischen einer oberen und unteren Abdeckung angeordnet ist bzw. sind, und mit elektrischen Anschlußelementen in Verbindung steht bzw. stehen, dadurch gekennzeichnet, daß im Anschlußbereich (22) des Flächenheizelementes (10) ein die elektrischen Anschlußelemente enthaltendes Gehäuse (1) angebracht ist, welches an seiner einen Seite mit Kontaktstiften (2) und an seiner gegenüberliegenden Seite mit diesen angepaßten Kontakthülsen (3) ausgerüstet ist.

2. Flächenheizelement nach Anspruch 1, dadurch gekennzeichnet, daß in die eine Seite des Gehäuses (1) unter Fortfall der Kontaktstifte (2) ein elektronischer thermostatischer Regler als Einschubeinheit über innenliegende Kontaktstifte (15) eingesetzt ist, der an eine Spannungsquelle anschließbar ist.

Dipl.-Ing. A. Spalthoff, Patentanwalt, 43 Essen

3. Flächenheizelement nach Anspruch 1 und/oder einem oder mehreren der folgenden, dadurch gekennzeichnet, daß die Einschubeinheit mit dem Regler einen zusätzlichen Anschluß für eine Fotodiode oder einen Fotowiderstand besitzt.

4. Flächenheizelement nach Anspruch 1 und/oder einem oder mehreren der folgenden, dadurch gekennzeichnet, daß an einer Seite des Gehäuses (1) im Bereich seines unteren Teils ein vorragender leistenförmiger Ansatz (9) angebracht ist.

5. Flächenheizelement nach Anspruch 1 und/oder einem oder mehreren der folgenden, dadurch gekennzeichnet, daß an einem Rand der mit dem Gehäuse (1) verbundenen Platte (4) od.dgl. eine Tropfkante (8) vorhanden ist.

6. Flächenheizelement nach Anspruch 1 und/oder einem oder mehreren der folgenden, dadurch gekennzeichnet, daß zwischen Platte (4) od.dgl. und Boden (6) des Gehäuses (1) der elektrische Anschlußbereich (22) des Flächenheizelementes (10) unter Herstellung einer leitenden Verbindung zwischen Heizleiter (17) und elektrischen Anschlußelementen des Gehäuses (1) befestigt ist.

7. Flächenheizelement nach Anspruch 1 und/oder einem oder mehreren der folgenden, dadurch gekennzeichnet, daß dieses zwei mit Abstand zueinander angeordnete Heizleiter (17) aufweist.

Dipl.-Ing. A. Spalthoff, Patentanwalt, 43 Essen

- 3 -

8. Flächenheizelement nach Anspruch 1 und/oder einem oder mehreren der folgenden, dadurch gekennzeichnet, daß die Heizleiter (17) an ihren oberen und unteren Enden an flächige Leiter (18,19) angeschlossen sind.

9. Flächenheizelement nach Anspruch 1 und/oder einem oder mehreren der folgenden, dadurch gekennzeichnet, daß der eine Leiter (18) von einem Rand (20) des Flächenheizelementes (10) in dessen Anschlußbereich (22) zum anderen gegenüberliegenden Rand (21) durchlaufend angeordnet ist.

10. Flächenheizelement nach Anspruch 1 und/oder einem oder mehreren der folgenden, dadurch gekennzeichnet, daß der andere Leiter (19) von dem einen Rand (20) des Flächenheizelementes (10) in dessen Anschlußbereich (22) entlang seiner Randbereiche zu dem anderen, gegenüberliegenden Rand (21) im Anschlußbereich (22) des Flächenheizelementes (10) geführt ist.

11. Flächenheizelement nach Anspruch 1 und/oder einem oder mehreren der folgenden, dadurch gekennzeichnet, daß zwischen den Heizleitern (17) ein weiterer Leiter (24) vorgesehen ist, der sich vom Anschlußbereich (22) des Flächenheizelementes (10) bis zu dessen unterem Bereich mit Anschluß an den Leiter (19) erstreckt.

12. Flächenheizelement nach Anspruch 1 und/oder einem oder

mehreren der folgenden, <u>dadurch gekennzeichnet</u>, daß die Heizleiter (17) und deren Leiter (18,19,24) sich zwischen zwei die obere und untere Abdeckung bildenden Folien befinden.

13. Flächenheizelement nach Anspruch 1 und/oder einem oder mehreren der folgenden, <u>dadurch gekennzeichnet</u>, daß die Unterseite der unteren Abdeckung mit Aluminium od.dgl. beschichtet ist.

14. Flächenheizelement nach Anspruch 1 und/oder einem oder mehreren der folgenden, <u>dadurch gekennzeichnet</u>, daß dieses ggf. zu mehreren aneinandergereiht zur Beheizung eines Aquariums dient, welches auf dieses aufgesetzt ist.

15. Flächenheizelement nach Anspruch 1 und/oder einem oder mehreren der folgenden, <u>dadurch gekennzeichnet</u>, daß die Einschubeinheit in einem separaten Gehäuse getrennt von diesem über eine steckbare Verbindungsleitung anschließbar ist.

**Fig.1**

0018655

Fig.2

Fig.3

Fig.4

16    3

14    1

Fig. 5

Fig.6